# DEMANDE DE BREVET EUROPEEN

(11) **EP 0 544 600 A1**
(43) Date de publication de la demande: **02.06.1993**
(21) Numéro de dépôt: 92403232.9
(22) Date de dépôt: 30.11.1992
(51) Int. Cl.: A62C 3/16, H02G 3/04

(54) **Dispositif d'aération coupe-feu à éléments statiques**

(30) Priorité: 28.11.1991 FR 9114722
(71) Demandeur: ELECTRICITE DE FRANCE Service National, F-75008 Paris (FR); MECANIQUE APPLICATION TISSUS, F-69130 Ecully (FR)
(72) Inventeur: Ricq, Sana, F-01800 Meximieux (FR); Egea, Dominique, F-69006 Lyon (FR); Bureau, Jacques, F-69130 Ecully (FR)
(74) Mandataire: Obolensky, Michel

(57) **Abrégé**

Dispositif d'aération coupe-feu destiné à assurer le libre échange d'air entre deux espaces séparés par une paroi qui en est équipée et à interrompre le passage de gaz au travers de la paroi, lorsque le feu se déclare dans l'un des espaces, caractérisé en ce qu'il comporte au moins un corps (10) en un matériau réfractaire destiné à être disposé dans un orifice de la paroi, ledit corps étant traversé par un passage d'aération (17) à l'extrémité duquel, qui débouche sur une face du corps tournée dans la direction d'où peut venir le feu, est disposé un élément (21) en matériau intumescent qui en l'absence de feu laisse libre une portion de la section transversale du passage d'aération (17) et qui est au moins partiellement entouré d'un matériau souple (22), de guidage et de confinement du gonflement du matériau intumescent (21) dans le passage d'aération (17) afin de lui faire obturer totalement ledit passage en cas de feu.

## Description

La présente invention est relative à la protection contre la propagation du feu entre des zônes séparées par une paroi et entre lesquelles un libre échange d'air doit se produire en temps normal et se rapporte plus particulièrement à un dispositif coupe-feu pouvant être monté dans la paroi de séparation des zônes précitées.

Les protections coupe-feu en particulier pour les câbles électriques de puissance sont assurées au moyen d'enveloppes coupe-feu réalisées en produits étanches.

De tels câbles dégagent par effet Joule, une quantité de chaleur qui provoque un échauffement dans leur masse.

La température atteinte par un câble après stabilisation est liée à l'efficacité de l'enveloppe de protection coupe-feu.

Il est donc nécessaire de réaliser un dispositif coupe-feu qui, tout en assurant en cas de feu, la protection requise, c'est-à-dire une fonction coupe-feu pendant une periode prédéterminée, permette dans les conditions normales de fonctionnement une dissipation de la chaleur dégagée par effet Joule suffisante pour garantir la bonne tenue dans le temps des câbles protégés.

Jusqu'à présent la ventilation des câbles electriques de puissance à l'intérieur de leur gaine ou enveloppe de protection était assurée soit par un système dynamique appelé "clapet à sangle", soit par un dispositif de protections pourvu d'une ouverture non obturable en cas d'incendie.

Le système à clapet à sangle présente les inconvénients suivants :
- La complexité de sa construction nécessite de le réaliser en partie de façon unitaire, à la demande, sur site ;
- il est sujet à des risques de fermeture intempestive par rupture mécanique de la sangle à fusible thermique alors que les câbles protégés sont en service ;
- il est d'une réouverture difficile après incendie ;
- il est difficile à mettre en place avec précision par rapport à du matériel environnant du fait de son encombrement important provoqué par la présence de la sangle et d'un couvercle devant être maintenu ouvert dans les conditions normales de fonctionnement.

L'invention vise à remédier aux inconvénients des dispositifs connus en créant un dispositif coupe-feu qui tout en étant d'une construction particulièrement simple, assure la fonction d'aération et la fonction coupe-feu d'une façon particulièrement efficace.

Elle a donc pour objet un dispositif d'aération coupe-feu destiné à assurer le libre échange d'air entre deux espaces séparés par une paroi qui en est équipée et à interrompre tout passage d'air au travers de la paroi, lorsque le feu se déclare dans l'un des espaces, caractérisé en ce qu'il comporte au moins un corps, en matériau réfractaire, destiné à être disposé dans un orifice de la paroi, ledit corps étant traversé par un passage d'aération à l'extrémité duquel qui débouche sur la face du corps tournée dans la direction d'où peut venir le feu, est disposé un élément en matériau intumescent qui en l'absence de feu laisse libre une portion de la section transversale du passage d'aération et qui est au moins partiellement entouré d'un matériau souple, de guidage et de confinement du gonflement du matériau intumescent dans le passage d'aération afin de lui faire obturer totalement ledit passage en cas de feu.

L'invention sera mieux comprise à la lecture de la description qui va suivre, faite en référence aux dessins annexés, donnés uniquement à titre d'exemple et sur lesquels :
- La figure 1 est une vue schématique en coupe d'une gaine de protection d'un chemin de câbles pourvue d'un dispositif d'aération coupe-feu suivant l'invention;
- La figure 2 est une vue en perspective éclatée du dispositif d'aération coupe-feu suivant l'invention ;
- La figure 3 est une vue de face du dispositif d'aération coupe-feu suivant l'invention ;
- La figure 3a est une vue partielle de face à plus grande échelle montrant un détail de la figure 3 ;
- La figure 4 est une coupe suivant la ligne 4-4 de la figure 3 ;
- La figure 5 est une coupe suivant la ligne 5-5 de la figure 4 ; et
- La figure 6 est une coupe schématique représentant un mode de montage du dispositif d'aération dans la paroi d'un caisson en laine céramique armé.

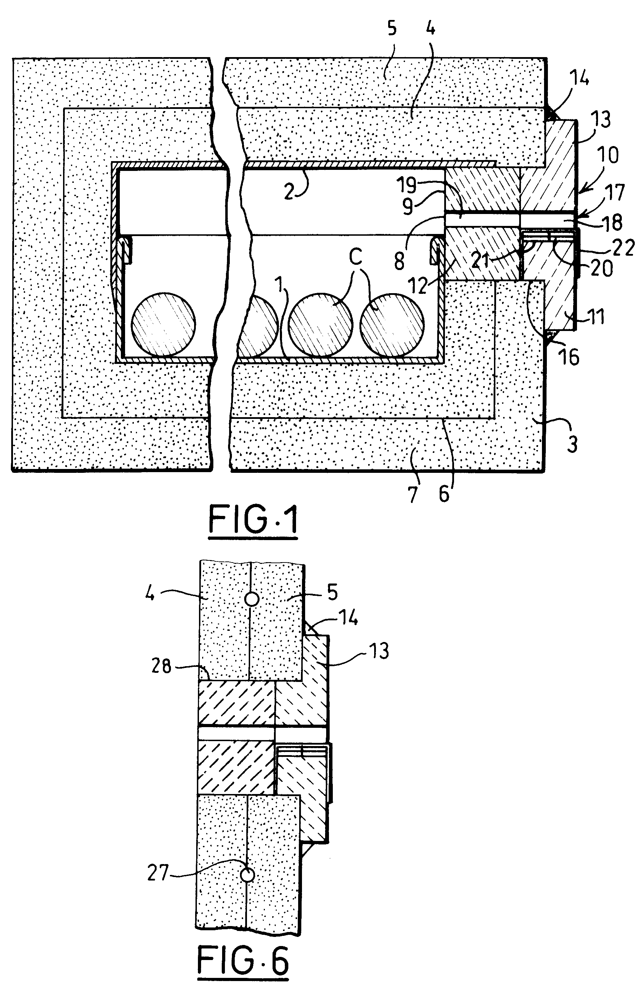

Sur la figure 1, on a representé en coupe une gaine de protection de câbles electriques de puissance C comprenant un support en tôle 1 sur le fond duquel sont disposés les câbles C.

Le support 1 est complété par un couvercle en tôle 2, l'ensemble étant logé dans une enveloppe 3 de protection thermique formée dans le présent exemple de deux couches 4 et 5 de laine céramique avec de la colle interposé entre les couches 4 et 5 et un revêtement 7 de tissu de même nature disposé sur la face externe de la couche extérieure 5 de laine céramique.

Dans une paroi latérale de la gaine ainsi constituée est ménagé un orifice 8 découpé dans l'enveloppe 3 en regard d'un intervalle 9 prévu entre le support 1 et son couvercle 2.

Dans l'orifice 8 est monté un dispositif d'aération coupe-feu 10 suivant l'invention. Ce dispositif d'aération comporte un corps en matériau réfractaire par exemple à base de fibres silico-alumineuses.

Dans le présent exemple le corps 10 est formé de deux éléments 11, 12, un premier élément 11 ayant une face libre tournée vers l'extérieur de l'enveloppe 3 et un second élément 12 ayant une face libre tournée vers l'intérieur de cette enveloppe.

Le premier élément 11 est pourvu d'une collerette périphérique 13 au moyen de laquelle il est appliqué contre la paroi externe de l'enveloppe 3 et fixé à celle-ci par exemple par collage en 14 et d'une portion d'âme 16 engagée et collée dans l'orifice 8 ménagé dans l'enveloppe.

Le second élément 12 a une section transversale constante et est engagé dans sa totalité dans l'orifice 8.

Les corps 11, 12 du dispositif d'aération sont traversés par un passage 17 d'aération comportant une partie 18 de section plus importante ménagée dans le premier élément 11 et une seconde partie 19 de plus faible section ménagée dans le second élément 12.

Les parois supérieures des deux parties 18, 19 du passage 17 sont alignées alors que leurs deux parois inférieures définissent un décrochement 20 dans lequel sont placés des éléments en matériau intumescent 21 qui reposent sur la paroi inférieure de la partie 18 du passage ménagée dans le premier élément 11 du corps et dont la hauteur à l'état non gonflé est à peu près égale à la hauteur du décrochement 20.

Ainsi en fonctionnement normal d'aération la section utile du passage 17 est à peu près égale à celle de la partie 19 ménagée dans le deuxième élément 12 du corps.

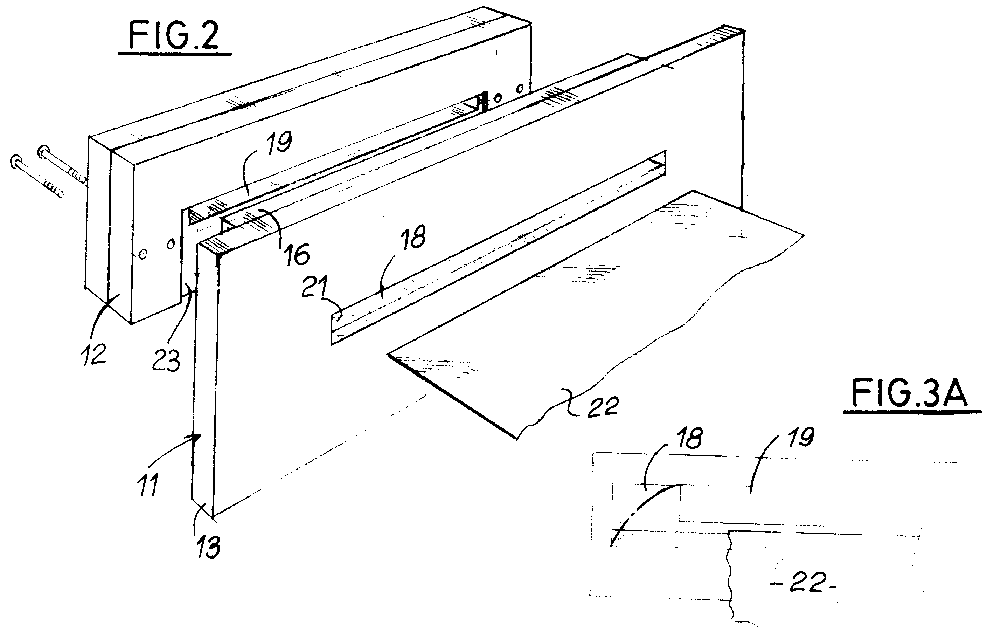

Sur les éléments 21 en matériau intumescent est disposé, un élément souple 22 par exemple en tissu de verre enrobé de silicone dont une extrémité est rabattue sur la face libre du premier élément 11 et fixée à celle-ci par collage et dont l'autre extrémité est engagée entre les faces en regard des premier et second éléments 11, 12 du corps d'une manière qui sera décrite notamment en référence à la figure 2.

L'élément 22 en tissu sert de guide d'expansion pour le produit intumescent et assure par ailleurs sa protection mécanique.

En se référant maintenant à la figure 2 sur laquelle le dispositif d'aération est représenté en perspective éclatée, on voit que la face du second élément 12 du corps située en regard du premier élément 11 comporte une empreinte 23 destinée à recevoir de façon libre l'extrémité de l'élément de guidage 22 opposée à son extrémité collée à la face libre du premier élément 11.

On constate par ailleurs que les première et seconde parties 18 et 19 du passage 17 ménagées dans les éléments 11 et 12 du corps sont réalisées sous forme de fentes allongées. La partie 19 ménagés dans le second élément 12 du corps débouche dans l'empreinte 23 pour la toile de guidage 22.

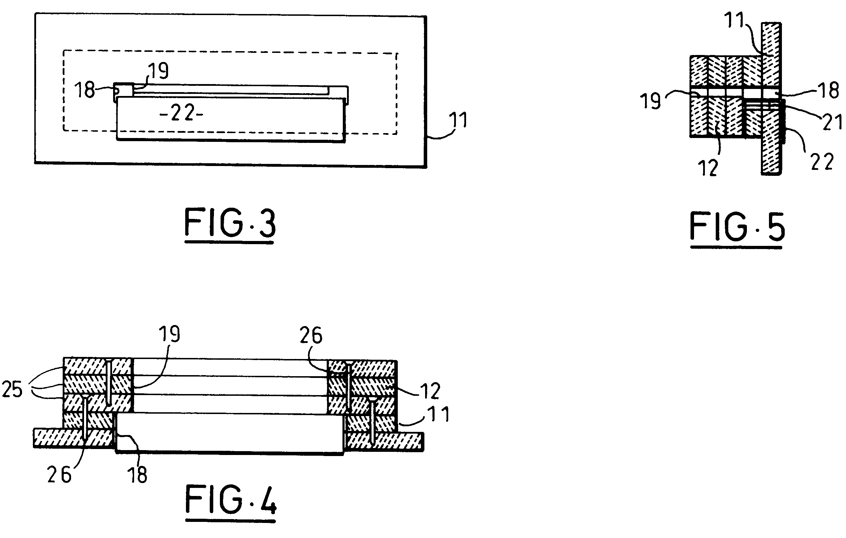

Aux figures 3 à 5, on a représenté un mode de réalisation particulier du dispositif suivant l'invention.

Sur la figure 3, on voit que le tissu 22 formant guide d'expansion pour le produit intumescent s'étend sur toute la longueur de la fente 18 ménagée dans le premier élément 11 du corps.

On voit également que la longueur de cette fente 18 est inférieure à celle de la fente 19 ménagée dans le second élément 12 pour une raison qui sera expliquée en référence à la figure 3a.

Sur la figure 4, on voit que le corps du dispositif coupe-feu est réalisé par l'assemblage de plaques 25 en un matériau réfractaire par exemple du type à base de fibres silico-alumineuses assemblées par des vis 26.

Dans le présent exemple, le premier élément 11 comporte deux plaques 25 tandis que le second élément 12 comporte trois plaques.

Selon une variante, l'assemblage des plaques 25 entre elles peut être réalisé par collage.

Sur la coupe représentée à la figure 5 apparait clairement la différence de hauteur des fentes 18 et 19 réalisées dans les premier et second éléments 11, 12 respectivement ainsi que l'emplacement occupé par le matériau intumescent 21 formé de quatre barrettes juxtaposées dont la hauteur est à peu près égale à la différence de hauteur des première et seconde parties 18, 19 du passage 17.

Le tissu 22 enveloppe les barrettes de matériau intumescent 21 sur trois côtés.

La figure 3a montre la façon dont le matériau intumescent se dilate sous l'effet de la chaleur.

Le volume qu'il occupe à l'état gonflé est représenté en trait mixte.

On voit qu'à ses extrémités le matériau intumescent gonflé présente une forme incurvée qui n'occupe pas la totalité de l'extrémité de la fente 18 du premier élément 11 du corps.

En revanche, du fait que la fente 19 du second élément 12 est plus courte que la fente 18, le matériau intumescent atteint son gonflement maximum au niveau de l'extrémité de la fente 19 et bouche totalement le passage 17 au niveau de cette fente.

Sur la figure 6, on a représenté un mode de montage d'un dispositif coupe-feu suivant l'invention dans une paroi formée de deux couches 4, 5 de laine céramique habillant une structure en treillis 27.

Le dispositif coupe-feu est monté dans un orifice destiné à le recevoir, avec interpositions d'une couche de colle 28.

La partie du dispositif formant collerette 13 est fixée à la face correspondante de la couche 5 en laine céramique par un cordon de colle 14 comme déjà représenté à la figure 1.

Le dispositif qui vient d'être décrit est destiné à assurer une protection contre le feu sur une face d'une paroi.

Il est cependant possible de réaliser une protection coupe-feu sur deux faces opposées. A cet effet, il suffit de placer dans un orifice de la paroi deux dispositifs du type décrit, plus haut ayant un élément en matériau intumescent placé à proximité de chaque face de la paroi, le passage d'aération traversant la paroi étant défini par les deux dispositifs précités, complétés éventuellement par des éléments de liaison en matériau réfractaire, dont le nombre et l'épaisseur sont fonction de l'épaisseur de la paroi.

Dans les divers exemples qui viennent d'être décrits, le passage d'aération a une forme de fente rectiligne. On peut cependant envisager de donner à ce passage une autre forme quelconque et de lui adapter la forme du matériau intumescent.

Les divers essais réalisés notamment sur des dispositifs d'aération coupe-feu montés dans des gaines de protection de chemins de câble ont révélé une obturation parfaite des passages d'aération en présence d'une élévation de température correspondant à une situation d'incendie et ceci de façon reproductible.

## Revendications

1. Dispositif d'aération coupe-feu destiné à assurer le libre échange d'air entre deux espaces séparés par une paroi qui en est équipée et à interrompre le passage de gaz au travers de la paroi, lorsque le feu se déclare dans l'un des espaces, caractérisé en ce qu'il comporte au moins un corps (10) en un matériau réfractaire destiné à être disposé dans un orifice de la paroi, ledit corps étant traversé par un passage d'aération (17) à l'extrémité duquel qui débouche sur la face du corps tournée dans la direction d'où peut venir le feu, est disposé un élément (21) en matériau intumescent qui en l'absence de feu laisse libre une portion de la section transversale du passage d'aération (17) et qui est au moins partiellement entouré d'un matériau souple (22), de guidage et de confinement du gonflement du matériau intumescent (21) dans le passage d'aération (17) afin de lui faire obturer totalement ledit passage en cas de feu.

2. Dispositif coupe-feu suivant la revendication 1, caractérisé en ce que le passage d'aération (17) comporte une première partie (18) débouchant sur la face du corps (10), tournée dans la direction d'où peut venir le feu et une seconde partie (19) de section inférieure à celle de la première partie (18) et débouchant sur la face opposée du corps (10), le matériau intumescent étant disposé dans la première partie (18) dudit passage sur une hauteur égale à la différence de hauteur des première et seconde parties (18, 19) du passage d'aération (17).

3. Dispositif suivant l'une des revendications 1 et 2, caractérisé en ce que le corps (10) est réalisé en au moins deux éléments (11, 12) les première et seconde parties (18, 19) du passage d'aération (17) étant ménagées dans le premier et second éléments (11, 12) respectivement.

4. Dispositif suivant la revendication 3, caractérisé en ce que le corps (10) est réalisé par l'assemblage de plaques (25) en matériau réfractaire réunies par des vis ou de la colle.

5. Dispositif suivant l'une des revendications 1 à 4, caractérisé en ce que le matériau souple (22) de guidage et de confinement du gonflement du matériau intumescent (21) est constitué par un élément en tissu de verre enrobé de silicone dont une extrémité est rabattue sur la face libre du premier élément (11) et fixée à celle-ci par collage et dont l'autre extrémité est engagée entre les faces en regard des premier et second éléments (11, 12) du corps (10) dans une empreinte (23) ménagée dans l'un des premier et second éléments (11, 12).

6. Dispositif suivant l'une des revendications 2 à 5, caractérisé en ce que les première et seconde parties (18, 19) du passage d'aération (17) sont constituées par des fentes allongées, la fente (18) ménagée dans le premier élément (11) du corps ayant une longueur supérieure à celle de la fente (19) ménagée dans le second élément (12) du corps, et en ce que le matériau intumescent (21) logé dans la première partie (18) du passage a la même longueur que celle-ci et assure lors de son gonflement, en raison de sa longueur supérieure à celle de la fente (19) du second élément (12), l'obturation totale de cette dernière.

7. Dispositif d'aération coupe-feu destiné à réaliser une protection contre le feu sur deux faces opposées d'une paroi, caractérisé en ce qu'il comporte deux dispositif suivant l'une quelconque des revendications 1 à 6, placés dans un passage traversant la paroi et comprenant chacun un élément en matériau intumescent disposé à l'extrémité du passage d'aération débouchant sur la face de la paroi correspondante, le passage d'aération traversant la paroi étant défini par les deux dispositifs complétés éventuellement par des éléments de liaison en matériau réfractaire dont le nombre et l'épaisseur sont fonction de l'épaisseur de la paroi.
